# EUROPEAN PATENT APPLICATION

(11) **EP 3 670 165 A1**
(43) Date of publication of application: **24.06.2020**
(21) Application number: 19218336.6
(22) Date of filing: 19.12.2019
(51) Int. Cl.: B29D 30/06, B29D 30/16, B60C 15/00, B60C 15/05

(54) **METHOD OF BUILDING A TIRE WITH NO PLY TURNUP ANDE METHOD OF MOLDING A GREEN TIRE**

(30) Priority: 20.12.2018 US 201862782479 P; 17.10.2019 US 201916655318
(71) Applicant: The Goodyear Tire & Rubber Company, Akron, OH 44316 (US)
(72) Inventor: STOILA, George Michael, Tallmadge, OH Ohio 44278 (US); ANDERSON, John Edward, Atwater, OH Ohio 44201 (US); HOGAN, Michael James, Tallmadge, OH Ohio 44278 (US); MULLER, Philippe Joseph Auguste, B-6971 Champlon (BE); BONNET, Gilles, L-9176 Niederfeulen (LU); REICHLING, Gilles, L-9189 Vichten (LU); LIONETTI, Robert Edward, L-7227 Bereldange (LU); MARECHAL, Frederic, B-6781 Selange (BE); DI PRIZIO, Olivier, F-57330 Hettange-Grande (FR); SOULTIS, Nicolas, B-6700 (BE)
(74) Representative: Kutsch, Bernd

(57) **Abstract**

A method of building a tire (10) having a carcass structure having no ply turnup is disclosed. The method comprises the steps of: applying an inner liner (320) and a chafer (324) onto a tire building drum (300); radially expanding the center portion (310) of the drum (300) and applying a first column bead (330); applying a layer of ply (350); applying a second column bead (360); turning up the chafer (324); and then inflating the so obtained carcass structure and applying the tire tread (50) and the tire sidewalls. Also, method of molding a green tire having a first and second bead area is disclosed which comprises the steps of: inserting a clamping device (100) inside a tire bladder (1300) and then inserting the clamping device (100) and the bladder (1300) into the green tire; and bringing or aligning outer surfaces of the clamping device (100) into engagement with a respective bead area of the green tire.

## Description

### Field of the Invention

The invention relates generally to tires and more particularly to a pneumatic tire.

### Background of the Invention

For high performance and ultrahigh performance tires, it is often desired to eliminate the ply turnup around the bead. Eliminating the ply turnup removes the stress concentration and allow construction using larger diameter reinforcing cords. However, it is difficult to build the tire on a conventional tire building drum or without building the tire on a solid core. The ply cord typically pulls out from the bead during the tire curing process because of the rapid expansion and transformation from green built dimensions to cured dimensions of the tire carcass during the cure process. A use of a solid core eliminates the movement of the carcass. However, building a tire on a solid core requires special equipment and often is a much slower tire building process. Thus, it is desired to provide a method and apparatus for building a tire that has no ply turnup using conventional tire building equipment.

### Summary of the Invention

The invention relates to a method in accordance with claims 1 or 13 respectively.

Dependent claims refer to preferred embodiments of the invention.

In one aspect of the invention, a method of building a tire having a carcass structure having no ply turnup is provided, the method comprising the steps of: applying an inner liner and a chafer onto a tire building drum; radially expanding the center portion of the drum and applying a first column bead; applying a layer of ply; applying a second column bead; turning up the chafer; and then inflating the so obtained carcass structure under a pressure below 150 hPa and applying the tire tread and the tire sidewalls.

In a preferred aspect of the invention, the step of applying the inner liner and the chafer onto the tire building drum is followed by or after the step of radially expanding the center portion of the drum, the step of radially expanding the center portion of the drum is followed by or after the step of applying the first column bead, the step of applying the first column bead is followed by of after the step of applying the layer of ply, the step of applying the layer of ply is followed by or after applying the second column bead, and the step of applying the second column bead is followed by or after the step of turning up the chafer. Preferably, the so obtained carcass structure is then inflated on the tire building drum under the pressure below 150 hPa and then the tire tread and the tire sidewalls are applied.

In a preferred aspect of the invention, the first column bead is formed by winding a wire onto the tire building drum.

In a preferred aspect of the invention, the second column bead is formed by winding a wire or a bead cord comprising a plurality to twisted filaments onto the tire building drum.

In a preferred aspect of the invention, the method further comprises the step of applying a toeguard. Preferably, the toeguard is applied prior to radially expanding the center portion of the drum and applying the first column bead.

In a preferred aspect of the invention, the method further comprises the step of applying a first apex, preferably a substantially triangular first apex, of the first column bead after applying the first column bead.

In a preferred aspect of the invention, the method further comprises the step of applying a first apex of the first column bead after applying the first column bead or together with the first column bead and/or further comprises the step of applying a second apex of the second column bead after applying the second column bead or together with applying the second column bead.

In a preferred aspect of the invention, the method further comprises the step of molding a green tire having said carcass structure and said tread and tire sidewalls.

In a preferred aspect of the invention, the method further comprises the steps of: inserting a clamping device inside a tire bladder and then inserting the clamping device and the bladder into the green tire; and bringing or aligning outer surfaces of the clamping device into engagement with a respective bead area of the green tire so that each bead area is clamped between a respective upper and lower mold ring and the clamping device during cure of the green tire. Preferably, the method further comprises the step of pulling a vacuum so that the clamping device is positioned into a closed position and/or the step of inflating the bladder so that segments of the clamping device are resiliently biased into an open position.

In a preferred aspect of the invention, the tire has only a single layer of ply in its carcass structure. It may however also have two layers of ply clamped by the first and second column bead which both do not have a ply turnup.

The invention provides in another aspect a method of molding a green tire having a first and second bead area, the method comprising the steps of: inserting a tire clamping device inside a tire bladder and then inserting the tire clamping device and the bladder into the green tire, aligning the outer surfaces of the tire clamping device into engagement with a respective bead area of the tire and a respective upper and lower mold ring so that each bead area is clamped between the respective mold ring and the tire clamping device during cure.

In yet another aspect of the invention, a method of molding a green tire having a first and second bead area is provided. The method comprises the steps of: inserting a clamping device inside a tire bladder and then inserting the clamping device and the bladder into the green tire; and bringing or aligning outer surfaces of the clamping device into engagement with a respective bead area of the green tire so that each bead area is clamped between a respective upper and lower mold ring and the clamping device during cure of the green tire.

Preferably, the method further comprises the step of pulling a vacuum so that the clamping device is positioned into a closed position and/or the step of inflating the bladder so that segments of the clamping device are resiliently biased into an open position.

### Definitions

"Axial" and "axially" means lines or directions that are parallel to the axis of rotation of the tire.

"Chafer" is a narrow strip of material placed at or around the outside of a tire bead to it from wearing and cutting against the rim and distribute the flexing above the rim.

"Circumferential" means lines or directions extending along the perimeter of the surface of the annular tread perpendicular to the axial direction.

"Lateral" means an axial direction.

"Radial" and "radially" means directions radially toward or away from the axis of rotation of the tire.

### Brief Description of the Drawings

The invention will be described by way of example and with reference to the accompanying drawings in which:
FIG. 1 is a cross-sectional view of a tire with no bead turnup;

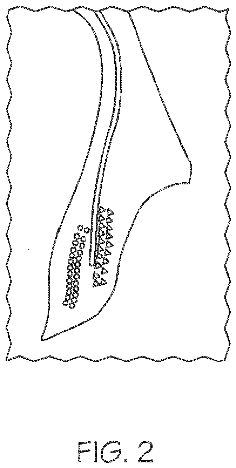

FIG. 2 is a close-up view of the bead area of the tire of FIG. 1 and depicts variants in wires for bead columns;
FIG. 3 is a schematic of a tire building drum shown with the inner liner, chafer, and toeguard applied;
FIG. 4 illustrates the tire building drum shown with the crown expanded;
FIG. 5 illustrates the tire building drum shown with the crown expanded and the first bead being formed;
FIG. 6 illustrates the tire building drum shown with the crown expanded and the ply layer being applied;
FIG. 7 illustrates the tire building drum shown with the crown expanded and the second bead being formed;
FIG. 8 illustrates the tire building drum shown with the crown expanded and the chafers being turned up by bladders;
FIG. 9 illustrates the green carcass being inflated with no bead lock pressure;
FIG. 10 illustrates the tread being applied to the shaped green carcass;
FIG. 11 illustrates the application of the sidewall over the tread;
FIG. 12 illustrates a perspective view of a tire clamping device in the closed position;
FIG. 13 illustrates a top view of the tire clamping device of FIG. 12 in the closed position;
FIG. 14 illustrates a perspective view of the tire clamping device in the open position; and
FIG. 15 illustrates a cross-segmental schematic of a tire in the tire mold with the ply clamping device and bladder installed.

### Detailed Description of Example Embodiments of the Present Invention

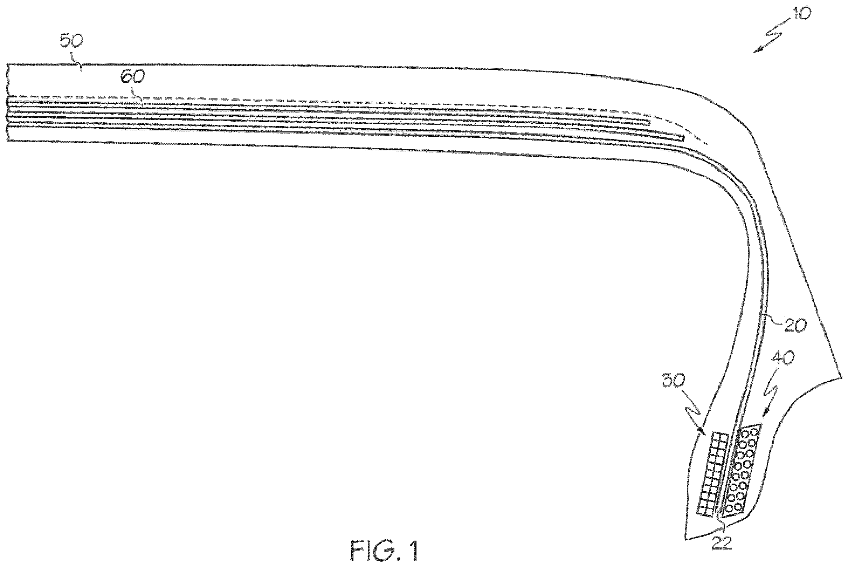

FIG. 1 illustrates a tire 10 of the present invention that has no ply turnup.

This means that the ply in the carcass structure of the tire extends from a region located under the tire tread radially downwards towards to beads of the tire but does not go around the beads and hence has no ply turnup portion in which the carcass ply extends, after having gone around the beads, radially upwards again. Instead, the carcass ply is clamped in the respective bead area and preferably ends between the bead columns as shown and explained below.

The tire 10 preferably has only a single layer or monolayer of ply 20 that has a radially inner portion 22 that is clamped between a first column bead 30, 330 and a second column bead 40, 360.

The tire 10 further includes a tread 50 and optionally one or more belts 60.

The invention is not limited to the bead columns 30, 40 as shown. There could also be variants of the columns inside or outside of the ply.

The bead columns 30, 40 could for instance be formed by traditional strap beads in the configuration of 2 x 11. The bead columns 30, 40 could also be made by spirally winding various wire treatments.

The tire 10 is preferably formed on a conventional two stage tire building drum 300 that has a crowning or radially expandable center portion 310, where crowning and bead locking functions are fully independent of each other.

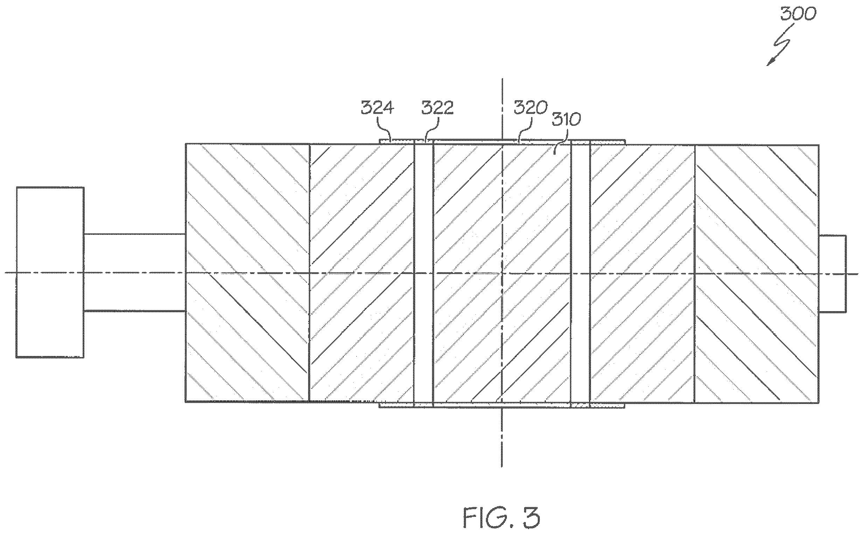

FIG. 3 illustrates that the tire 10 is built by applying an inner liner 320, a toeguard 322 and a chafer 324 to the tire building drum 300.

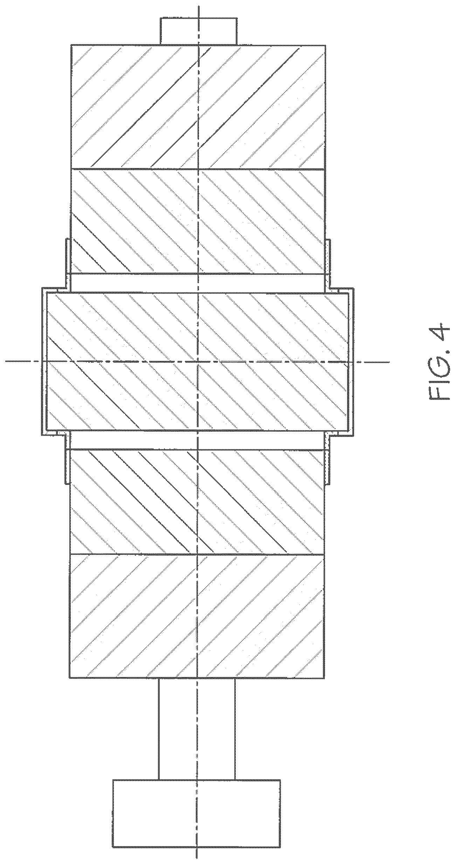

As shown in FIG. 4, the tire drum center portion may be radially expanded.

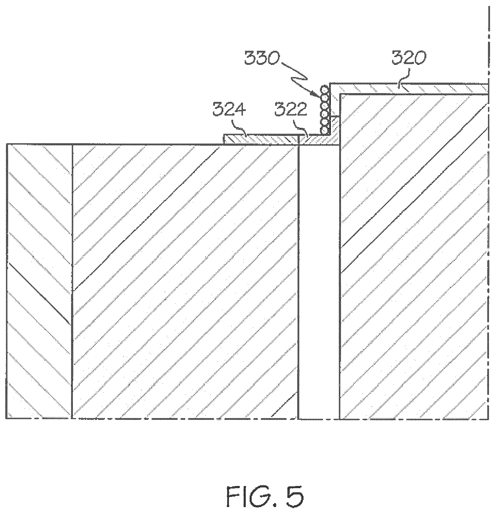

As shown in FIG. 5, the first column bead may be applied by either applying a preassembled first column bead 330 onto the tire drum, or by spirally winding a continuous wire onto the drum to form a column bead 330. Those skilled in the art would understand that the apparatus (not shown) to create a forging force to friction welds the materials together. Also, those skilled in the art would understand that various chemical adhesive coupons could be added to the assembly for additional welding in the green state. The first column bead 330 may be preassembled with an apex (not shown). In this case, the column bead 330 is applied together with the apex. Otherwise, an apex of the first column bead may be applied after applying the first column bead 330.

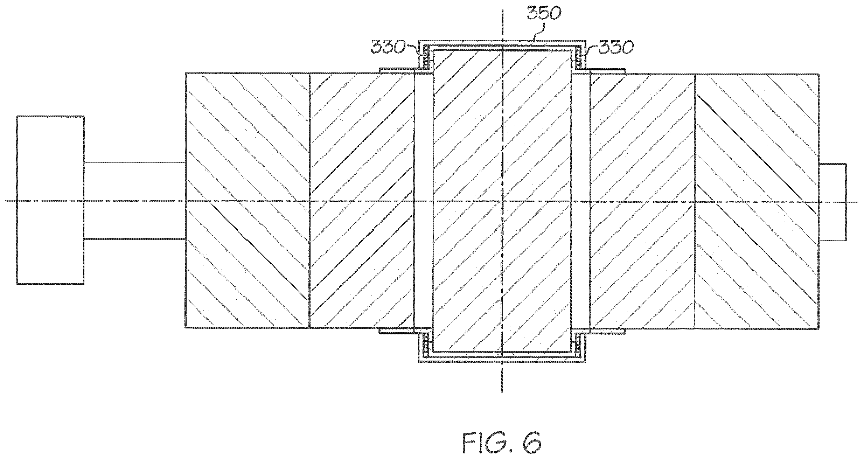

Next, as shown in FIG. 6 a single layer of ply 350 is applied onto the drum.

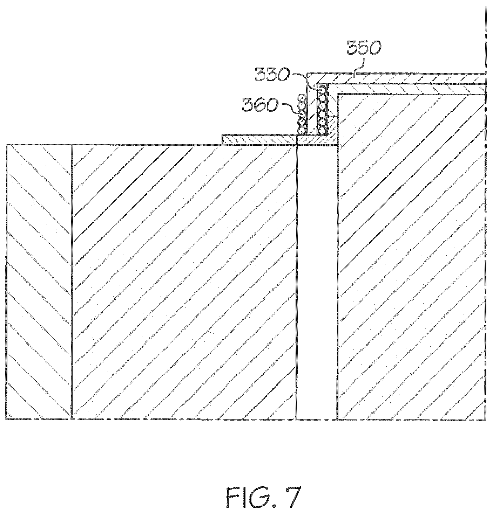

Next, as shown in FIG. 7, the drum is rotated as a wire is wound onto the assembly to form a second column bead 360.

Preferably, a second apex is then applied adjacent the second bead 360.

The first and second column bead 330, 360 function to clamp the ply 350

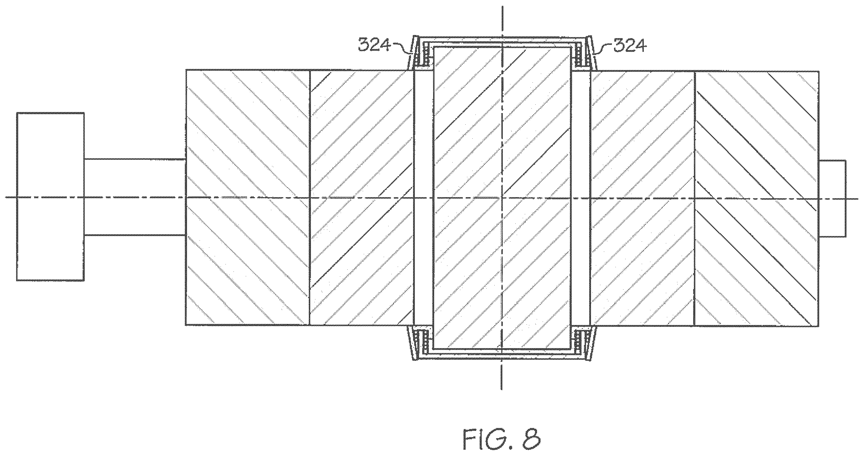

FIG. 8 illustrates that the chafer 324 is turned up by the bladder (not shown) of the tire building drum.

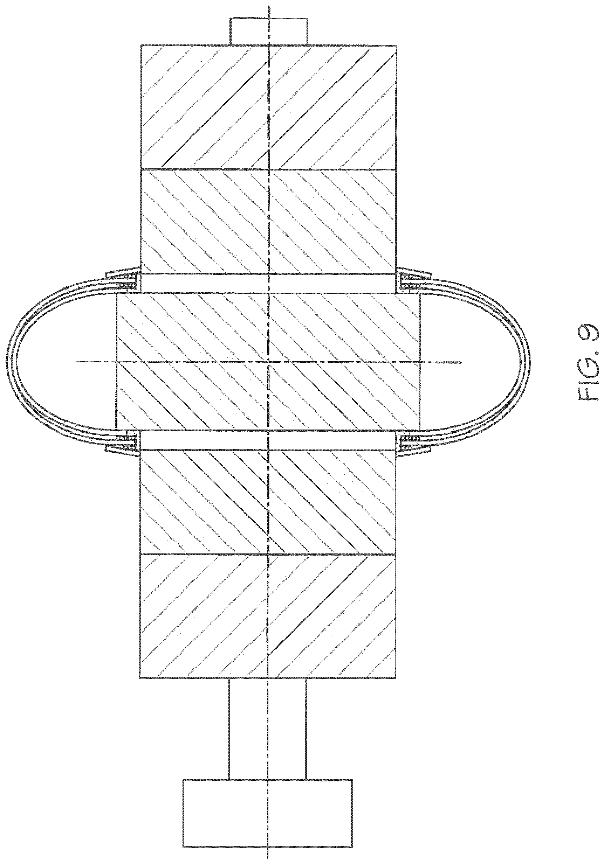

FIG. 9 illustrates that the carcass is inflated using low pressure air, i.e. under 150 mbars.

There is minimal bead lock force being applied, only enough force to seal the carcass shaping air from leaking.

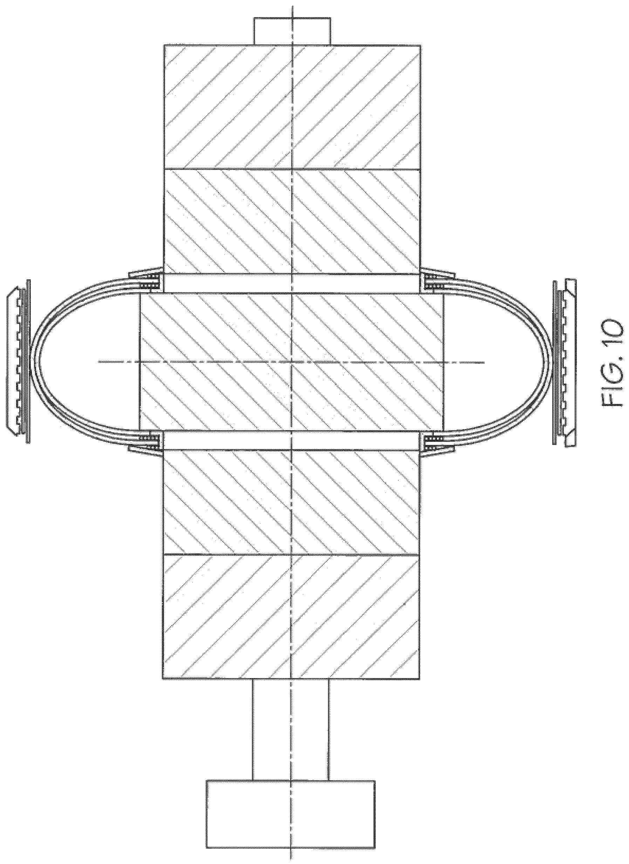

FIG. 10 illustrates that the tread is applied to the inflated carcass and then stitched.

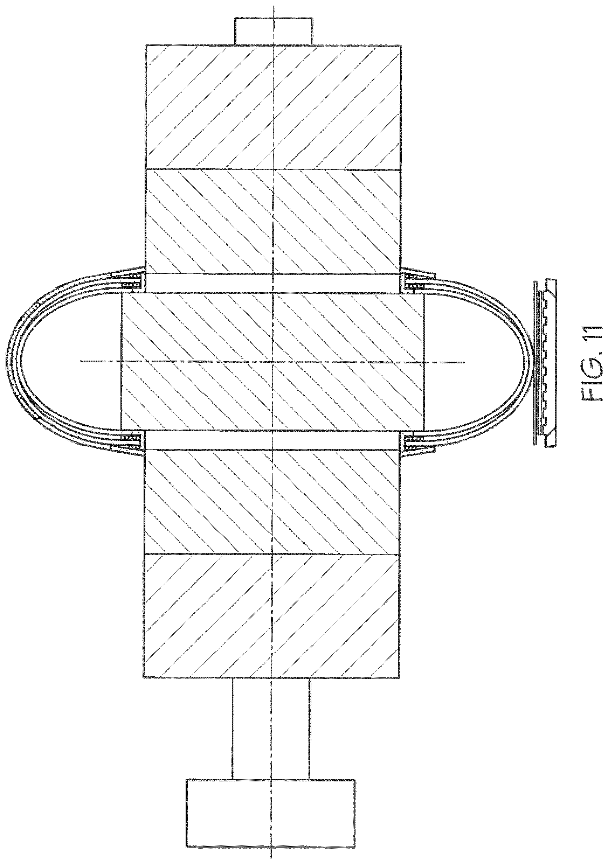

FIG. 11 illustrates that the sidewall is then applied, wherein the sidewall has a radially outer portion that extends over laterally outer end of the tread.

Next, the shaped green tire is removed from the drum 300. In order to cure the tire, the tire clamping device 100 as described in more detail, below, is inserted inside a curing bladder (not shown). Next, the tire curing bladder with the tire clamping device inside is positioned in the mold. A vacuum is drawn on the tire bladder which results in the tire clamping device being collapsed into the closed position. Next, the green carcass is slipped over the closed tire clamping device and bladder. Next, the bladder is inflated and springs of the tire clamping device are released, so that the segments are biased in a radially outward direction. The bead area 300 of the green carcass and bladder is clamped between the outer portions 122, 120 of the tire clamping device and the respective upper and lower mold rings 230, 240. Next, the tire is cured when the tire clamping device is in place to ensure that the ply remains positioned between the beads during cure and not pulled out of place due to the tire shaping pressure. Thus, the tire clamping device is sized so that when in the collapsed position, its outer diameter is less than the bead diameter, and capable of resiliently expanding so that its outer diameter in the expanded position is greater than the bead diameter of the green carcass to be cured.

### Tire Clamping device

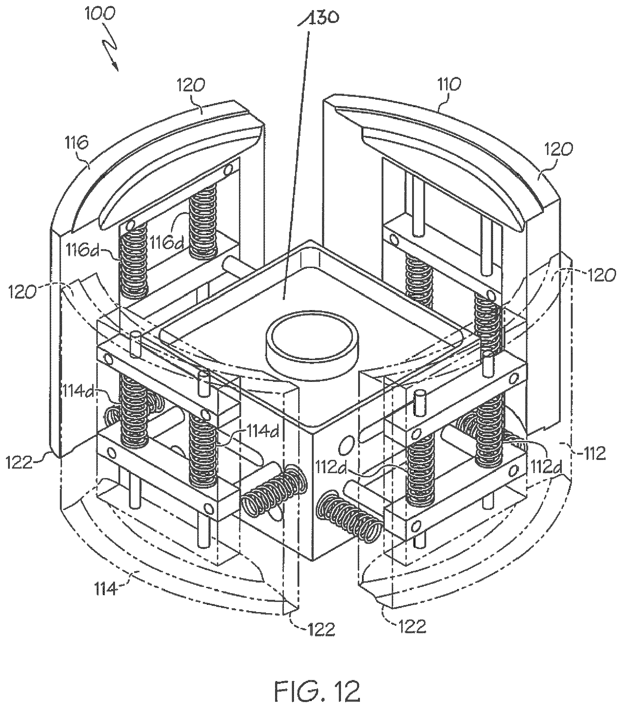

FIG. 12 illustrates a perspective view of a tire clamping device 100 that is used to clamp the bead area of the tire in the mold to ensure the ply of the green carcass is clamped between the tire clamping device 100 and the tire mold. This allows a tire to be cured that does not have a ply turnup and avoids a ply pullout during the cure when the tire is cured without a core.

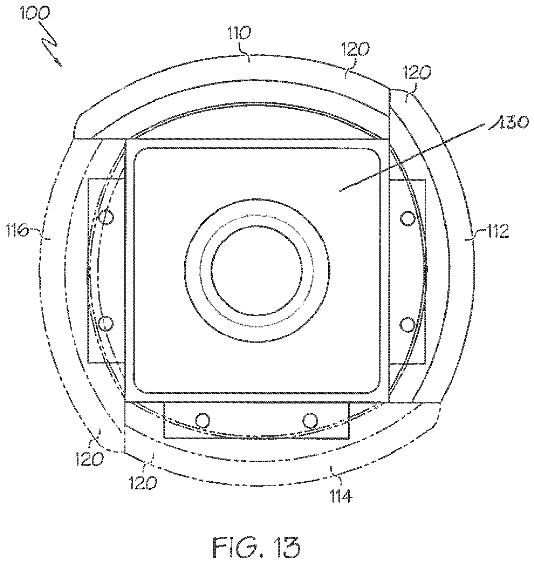

The tire clamping device 100 includes a plurality of segments 110, 112, 114 and 116. As shown in FIG. 13, when the segments are in the fully closed position, the tire clamping device has a round shape. The plurality of segment when joined together in the closed position, form outer rings 120, 122 that engages the tire bead and the lower radial portion of the curing bladder 1300 and hold the ply in place during cure.

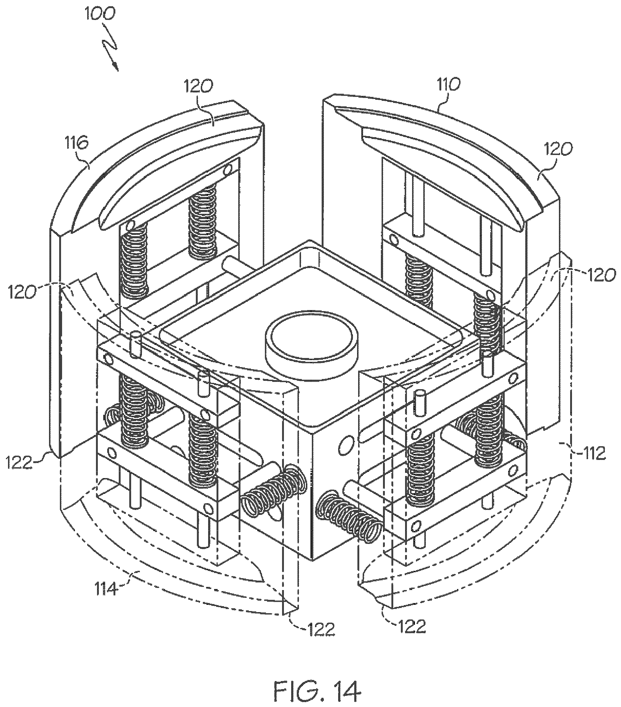

FIG. 14 illustrates that the segments 110, 112, 114 and 116 each have respective radially oriented springs 116a, 116b, 110a, 110b, 112a, 112b and 114a, 114b. The radially oriented springs bias the segments 110, 112, 114, 116 in the radially expanded position. Each segment preferably also has guide rails 110c, 112c, 114c, 116c. The radially oriented springs and the guide rails are located between the respective segments and an inner portion 130, in the example shown as a center square block 130 (although not limited to the square configuration).

FIG. 14 illustrates that the segments 110, 112, 114 and 116 each have transverse or axially oriented (with respect to the tire) springs 110d, 112d, 114d and 116d that are perpendicular to the radially oriented springs. The springs may be replaced with other mechanical mechanisms known to those skilled in the art, to facilitate opening and closing the tire clamping device.

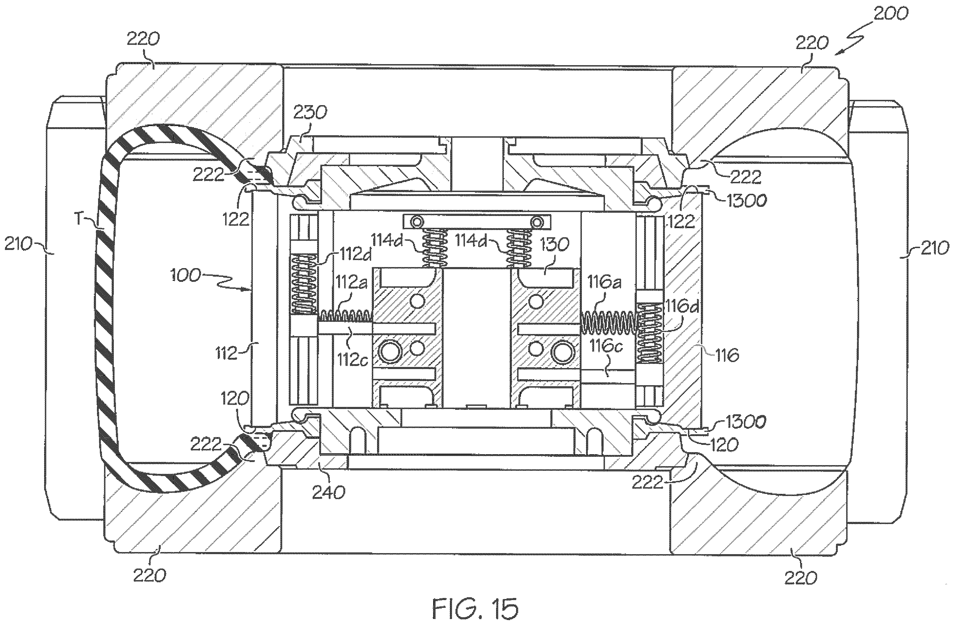

FIG. 15 illustrates a typical mold 200 used for curing passenger tires. The mold 200 has tread plates 210 for molding the tread of a tire, and sidewall plates 220 for forming the sidewalls of the tire. Each sidewall plate has a lower portion 222 located in the bead area of the tire. The mold further includes upper and lower mold rings 230, 240 that are located adjacent the lower portion 222 of the sidewall plates. The the mold rings work together with the tire clamping device to clamp the ply and bead area of the green tire during the cure.

## Claims

1. A method of building a tire (10) having a carcass structure having no ply turnup, the method comprising the steps of:
applying an inner liner (320) and a chafer (324) onto a tire building drum (300) ;
radially expanding the center portion (310) of the drum (300) and applying a first column bead (330);
applying a layer of ply (350);
applying a second column bead (360);
turning up the chafer (324); and then
inflating the so obtained carcass structure under a pressure below 150 hPa and applying the tire tread (50) and the tire sidewalls.

2. The method of claim 1 wherein the step of applying the inner liner (320) and the chafer (324) onto the tire building drum (300) is followed by or after the step of radially expanding the center portion (310) of the drum (300), wherein the step of radially expanding the center portion (310) of the drum (300) is followed by or after the step of applying the first column bead (330), wherein the step of applying the first column bead (330) is followed by or after the step of applying the layer of ply (350), wherein the step of applying the layer of ply (350) is followed by or after applying the second column bead (360), and wherein the step of applying the second column bead (360) is followed by or after the step of turning up the chafer (324).

3. The method of claim 2, wherein the so obtained carcass structure is then inflated on the tire building drum (10) under said pressure below 150 hPa, and wherein then the tire tread (50) and the tire sidewalls are applied.

4. The method of at least one of the previous claims wherein the first column bead (330) is formed by winding a wire onto the tire building drum (300).

5. The method of at least one of the previous claims wherein the second column bead (360) is formed by winding a wire or a bead cord comprising a plurality to twisted filaments onto the tire building drum (300).

6. The method of at least one of the previous claims, further comprising the step of applying a toeguard (322) preferably prior to radially expanding the center portion (310) of the drum (300) and applying the first column bead (330).

7. The method of at least one of the previous claims, further comprising the step of applying a first apex of the first column bead (330) after applying the first column bead (330) or together with the first column bead (330) and/or further comprising the step of applying a second apex of the second column bead (360) after applying the second column bead (360) or together with applying the second column bead (330).

8. The method of at least one of the previous claims further comprising the step of molding a green tire having said carcass structure and said tread (50) and tire sidewalls.

9. The method of claim 8, comprising the steps of:
inserting a clamping device (100) inside a tire bladder (1300) and then inserting the clamping device (100) and the bladder (1300) into the green tire; and
bringing or aligning outer surfaces of the clamping device (100) into engagement with a respective bead area of the green tire so that each bead area is clamped between a respective upper and lower mold ring (230, 240) and the clamping device (100) during cure of the green tire.

10. The method of claim 9 further comprising the step of pulling a vacuum so that the clamping device (100) is positioned into a closed position.

11. The method of claim 9 or 10 further comprising the step of inflating the bladder (1300) so that segments (110, 112, 114, 116) of the clamping device (100) are resiliently biased into an open position.

12. The method of at least one of the previous claims wherein the tire has only a single layer of ply (350) in its carcass structure.

13. A method of molding a green tire having a first and second bead area, the method comprising the steps of:
inserting a clamping device (100) inside a tire bladder (1300) and then inserting the clamping device (100) and the bladder (1300) into the green tire; and
bringing or aligning outer surfaces of the clamping device (100) into engagement with a respective bead area of the green tire so that each bead area is clamped between a respective upper and lower mold ring (230, 240) and the clamping device (100) during cure of the green tire.

14. The method of claim 13 further comprising the step of pulling a vacuum so that the clamping device (100) is positioned into a closed position.

15. The method of claim 13 or 14 further comprising the step of inflating the bladder (1300) so that segments (110, 112, 114, 116) of the clamping device (100) are resiliently biased into an open position.
